# EUROPEAN PATENT APPLICATION

(11) **EP 1 892 717 A1**
(43) Date of publication of application: **27.02.2008**
(21) Application number: 06757258.6
(22) Date of filing: 12.06.2006
(51) Int. Cl.: G11B 27/10, H04N 5/76

(54) **CONTENT TAG ATTACHMENT SUPPORT DEVICE AND CONTENT TAG ATTACHMENT SUPPORT METHOD**

(30) Priority: 13.06.2005 JP 2005172001; 08.06.2006 JP 2006160310
(71) Applicant: MATSUSHITA ELECTRIC INDUSTRIAL CO., LTD., Osaka 571-8501 (JP)
(72) Inventor: ENDO, Mitsuru c/o Matsushita Electr.Ind., Chuo-ku, Osaka 540-6207 (JP); KUWANO, Hiroyasu c/o Matsushita Electr.Ind., Chuo-ku, Osaka 540-6207 (JP); ISHIDA, Akira c/o Matsushita Electr.Ind., Chuo-ku, Osaka 540-6207 (JP)
(74) Representative: Grünecker, Kinkeldey, Stockmair & Schwanhäusser Anwaltssozietät
(86) International application number: PCT/JP2006/311773
(87) International publication number: WO 2006/134883

(57) **Abstract**

There is provided a content tag attachment support device enabling a person to perform both tag attachment work and correction word and suppressing increase of the work time. In this device, audio recognition means (104) recognizes audio inputted. Tag generation means (103) gives data obtained by audio recognition as a tag to the content reproduced by content reproducing means (101). Tag correction means (108) sends tag correction information to the tag generation means (103) and sends tag correction start completion report information to content reproduction control means (109). The content reproduction control means (109) controls the content reproducing means (101) so as to temporarily stop the content reproduction in synchronization with a start of the tag correction work and resume the content reproduction in synchronization with the end of the tag correction work.

## Description

### Technical Field

The present invention relates to a content tagging support apparatus and content tagging support method for tagging content.

### Background Art

Up till now, there has been a technique of added information associated with time base to digital content (hereinafter simply "content") having time base such as video data and audio data. This technique, called "tagging", improves the convenience of content reuse and has attracted attention. As an example of content tagging support apparatus of related art, there is a content tagging support apparatus that performs tagging operations via voice using speech recognition (for example, see Patent Document 1).

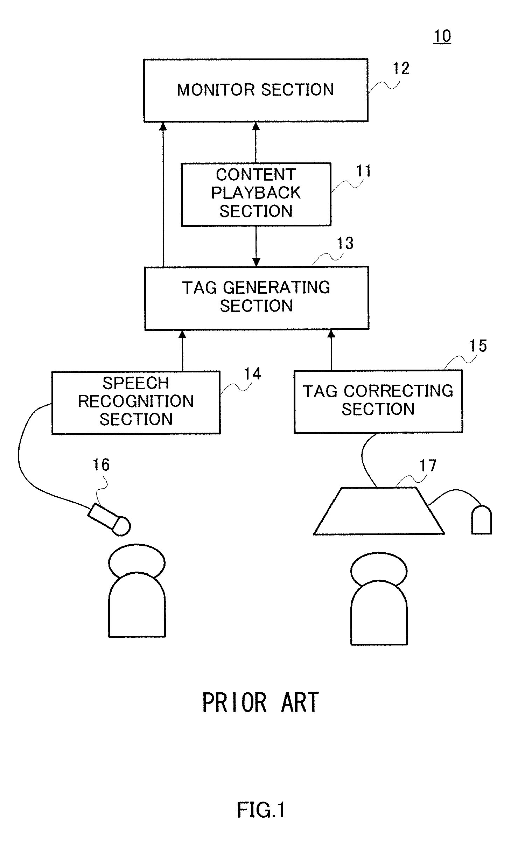

FIG.1 is a block diagram showing an example of a content tagging support apparatus of related art.

In content tagging support apparatus 10 shown in FIG.1, content playback section 11 decodes content, transmits a playback signal to monitor section 12 and displays the content on monitor section 12, and transmits the time code indicating the time base of the content, to tag generating section 13. Speech recognition section 14 recognizes speech inputted from input section 16 such as a microphone, and transmits a speech recognition result to tag generating section 13. Tag generating section 13 ties the speech recognition result with the time code and transmits the result to monitor section 12 and displays tagged video on monitor section 12 (tagging operation).

When the tag displayed on monitor section 12 needs to be corrected, tag correcting section 15 commands tag generating section 13 to correct the tag based on tag correction information inputted by the user via input section 17 such as a keyboard and mouse (tag correction operation).

By the way, a content tagging support apparatus on the market, which performs video recording or playback to media such as a hard disc and DVD-RAM (Digital Video Disc - Random Access Memory), has a so-called "time shift playback" function. According to this function, playback control can be performed in various manners while video is recorded. For example, it is possible to play content that is currently being recorded from the beginning or play the content faster within the recording time.

In the case of recording sports broadcast, there is a need that such content tag (or called "meta data") is provided immediately after games are over.

In a content tagging support apparatus of related art, tagging operations via voice require tag correction operation when errors such as recognition errors occur.
Patent Document 1: Japanese Patent Application Laid-Open No.2004-86124 (paragraph [0012] to [0015], FIG.1)

### Disclosure of Invention

### Problems to be Solved by the Invention

However, the content tagging support apparatus of related art shown in FIG.1 makes it difficult for one user to perform tagging operation and tag correction operation at the same time and requires two users so that one user says the tag and the other user corrects the tag.

If a single user tries to perform these operations, the user has to perform tag correction operation after the user finishes a content playback and tagging operation. In this case, time is required to check whether a tag is correct, remember the correct tag if the tag is wrong, and correct the tag. Further, it is assumed that the tag correction operation is performed in the middle of a content playback and the tagging operation. However, in this case, the content needs to be paused according to the tagging operation so that the content playback point does not move forward during the tag correction operation. As a result, the time to move the mouse between various operation buttons and perform several operations and the operation time to correct a tag, are required separately.

To solve the above-described problems of related art, it is an object of the present invention to provide a content tagging support apparatus and content tagging support method whereby a user is able to perform tagging operation and tag correction operation and whereby the user is able to reduce the increase of operation time for tag correction.

### Means for Solving the Problem

The content tagging support apparatus of the present invention, that supports content tagging operation, employs a configuration having: a speech input section that receives speech as input; a speech recognition section that performs recognition processing of the inputted speech; a playback section that plays content; a tag generating section that combines data obtained by the recognition processing of the inputted speech with a playback point in the content where the speech is inputted, and outputs the combination as a content tag; a tag correcting section that outputs tag correction information for correcting a tag added to the content to the tag generating section; and a content playback control section that outputs playback control information for controlling a content playback, to the content playback section, wherein: the tag correcting section outputs tag correction start and end report information for reporting a start and an end of a tag correction operation according to the tag correction information, to the content playback section; and the content playback control section controls the content playback section such that the content playback is paused in synchronization with a start of tag correction operation and is restarted in synchronization with an end of the tag correction operation, according to the tag correction start and end report information outputted from the tag correcting section.

The content tagging support method of the present invention, that supports content tagging operation, includes: a tag correction start monitoring step of monitoring a start of a tag correction operation for correcting a tag added to content where a playback is started; a content playback pause step of pausing a content playback when the tag correction start monitor step detects the start of the tag correction operation; a tag correction monitoring step of monitoring an end of the tag correction operation when the content playback pause step pauses the content playback; and a content playback restarting step of restarting the content playback when the tag correction end monitor step detects the end of the tag correction operation.

### Advantageous Effect of the Invention

According to the present invention, even if a single user perform tagging operation and tag correction operation, it is possible to reduce operation time increased by the tag correction operation.

### Brief Description of Drawings

FIG.1 is a block diagram showing an example of a configuration of a content tagging support apparatus of related art;
FIG.2 is a block diagram showing a configuration of a content tagging support apparatus according to an embodiment of the present invention;
FIG.3 illustrates an example of a tagging window of a content tagging support apparatus according to the present embodiment;
FIG.4 illustrates an example of a tag check window of a content tagging support apparatus according to the present embodiment;
FIG.5 illustrates an example of a tag correction window of a content tagging support apparatus according to the present embodiment;
FIG.6 is a flowchart showing the steps of tagging operation of a content tagging support apparatus according to the present embodiment;
FIG.7 is a flowchart showing the steps of tag correction operation of FIG.6; and
FIG.8 illustrates an example of a playback speed set window of a content tagging support apparatus according to the present embodiment.

### Best Mode for Carrying Out the Invention

An embodiment of the present invention will be described in detail below with reference to the accompanying drawings.

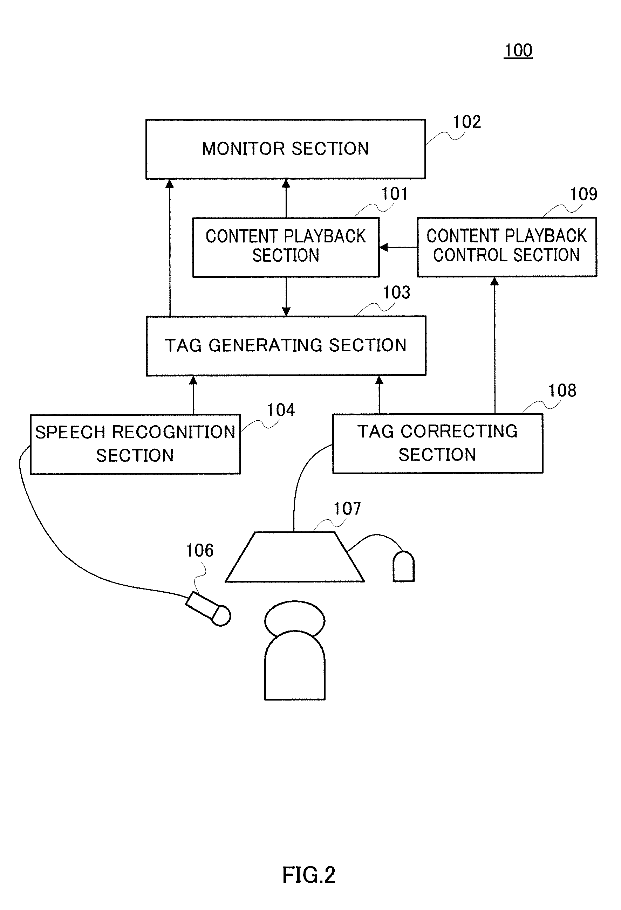

FIG. 2 is a block diagram showing the configuration of the content tagging support apparatus according to an embodiment of the present invention.

As shown in FIG.2, content tagging support apparatus 100 of the present embodiment has content playback section 101, monitor section 102, tag generating section 103, speech recognition section 104, input sections 106 and 107, tag correcting section 108 and content playback control section 109.

Content playback section 101 decodes content, transmits a playback signal to monitor section 102 and displays the content on monitor section 102, and transmits the time code to tag generating section 103.

Speech recognition section 104 recognizes speech inputted from input section 106 such as a microphone, and transmits a speech recognition result to tag generating section 103. Specifically, speech recognition section 104 converts recognized speech into text data each time, and outputs the text data to tag generating section 103.

Tag generating section 103 ties a speech recognition result with the time code, transmits the result to monitor section 102 and displays tagged video on monitor section 102. That is, tag generating section 103 ties information of speech converted into text data with the time code of the content related to the text data, and adds the combination of the text data and the time code to the content as a tag. For example, when the name of an object displayed on monitor section 102 is said, the time at which the object is displayed is the time code. Further, this time code and text data indicating the sound of the name of the object, are added to content as a tag and are displayed on monitor section 102. Here, considering the time required for these text data applicable to speech by input from input section 106 to tag generating section 103, generating section 103 may take the time code outputted as a tag certain period back.

When a tag displayed on monitor section 102 needs to be corrected, the user inputs details of correction via input section 107 such as a keyboard and mouse.

Tag correcting section 108 transmits tag correction information having details of tag correction to tag generating section 103, according to inputted information from input section 107. Further, tag correcting section 108 outputs tag correction start and end report information for reporting a start and an end of tag correction.

Content playback control section 109 transmits playback control information controlling content playback and playback speed to content playback section 101, according to tag correction start and end report information outputted from tag correcting section 108. The playback control information is information for controlling a content playback to pause in synchronization with a start of tag correction and to restart the content playback automatically in synchronization with an end of tag correction.

Monitor section 102 provides a tagging window for performing the tagging operation, according to the playback signal inputted from content playback section 101 and the tag inputted from tag generating section 103. Further, monitor section 102 provides tag check window that allows the user to check whether or not to perform tag correction, and displays the tag check window with the tagging window. Further, monitor section 102 provides and displays tag correction window for tag correction when tag correction is required.

Content tagging support apparatus 100 has a CPU (Central Processing Unit), a ROM (Read Only Memory) that stores control program performed by the CPU, and a RAM (Random Access Memory) operating as an operation memory for the CPU (not shown). That is, the functions of these parts of content tagging support apparatus 100 shown in FIG.2 are realized by executing control program by the CPU.

First, the windows displayed on monitor section 102 will be explained.

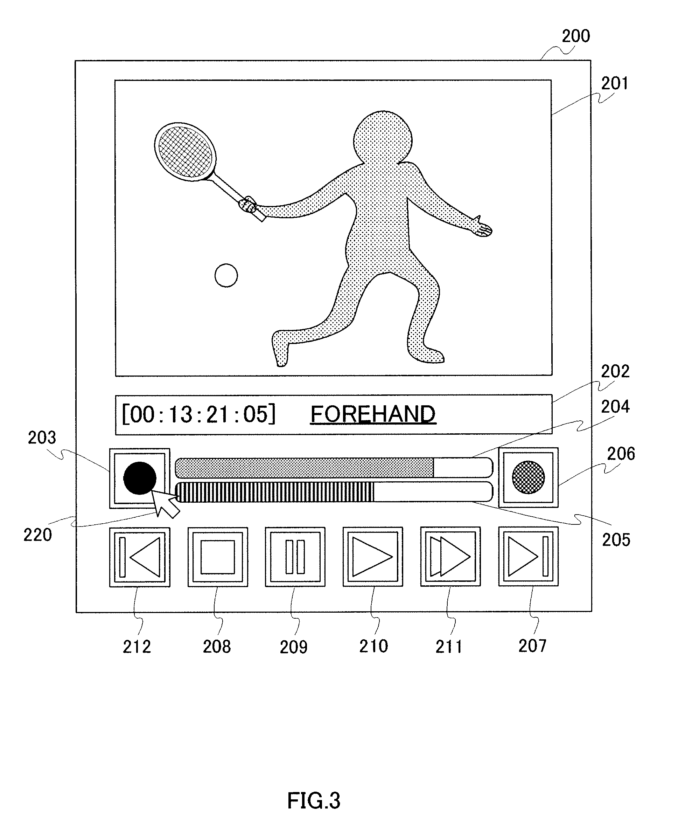

FIG. 3 illustrates an example of the tagging window provided at monitor section 102 as a user interface.

Tagging window 200 shown in FIG.3 provides content display window 201, tag display window 202, recording stat button 203, recording time display bar 204, playback time display bar 205, speech recognition start button 206, forward skip button 207, stop button 208, pausebutton 209, playback start button 210, fast playback button 211 and backward skip button 212.

Content display window 201 displays content to be played, and tag display window 202 displays the latest tag added to the content to be played. As described above, a tag that is displayed is composed of a time code and text data.

Recording start button 203 is provided for starting and ending recording, and speech recognition start button 206 is provided for starting and ending speech recognition. Recordingtimedisplaybar204displaysthe record time of video subject to content generation, and playback time display bar 205 displays the time of the playback of recorded video (hereinafter simply "playback"). Forward skip button 207 is provided for skipping playback forward, and backward skip button 212 is provided for skipping playback backward. Fast playback button 211 is provided for performing fast playback.

Further, the buttons and bars shown in FIG.3 employ GUI (Graphical User Interface). Therefore, starting operation via button operation is performed by moving mouse pointer 220 using a mouse and clicking on certain buttons. Hereinafter "press" will be used for the meaning of "click" for ease of explanation.

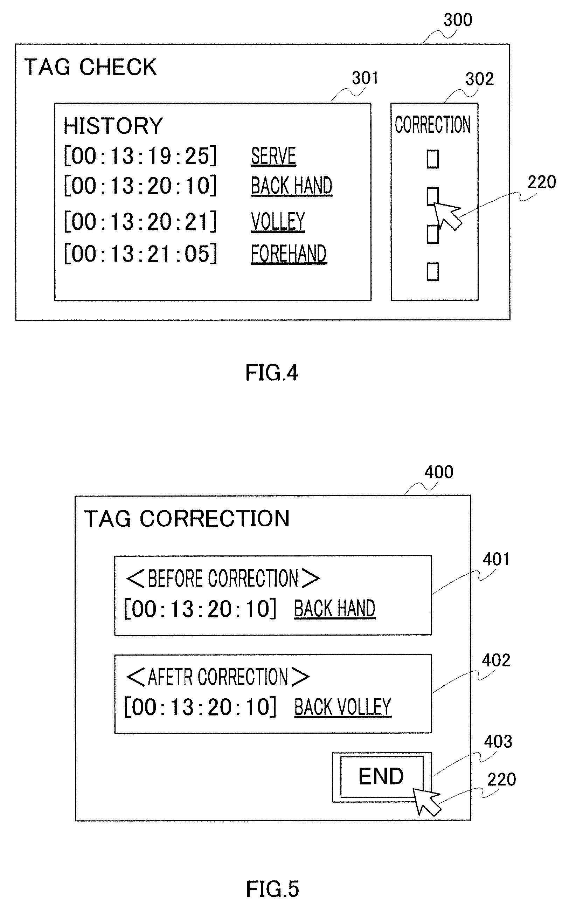

FIG.4 illustrates an example of a tag check window provided at monitor section 102.

Tag check window 300 shown in FIG. 4 has tag history window 301 and tag correction button 302. Tag history window 301 displays a history of tags that have been added to content. Further, tag correction button 302 is provided for determining which tag to correct from the tags displayed on tag history window 301. Further, tag check window 300 employs the same GUI as content display window 201.

FIG.5 illustrates an example of a tag correction window provided at monitor section 102.

Tag correction window 400 shown in FIG.5 has uncorrected tag window 401, corrected tag window 402 and end button 403. Uncorrected tag window 401 displays the detail of a tag selected to be corrected in tag check window 300. Corrected tag window 402 copies the same tag as displayed on uncorrected tag window 401 and displays the copied tag, and accepts corrections to the displayed detail. End button 403 is provided for determining to correct the tag by the corrected detail displayed on tag after-correction window 402. Further, tag correction window 400 employs the same GUI as tag display window 201 and tag check window 300.

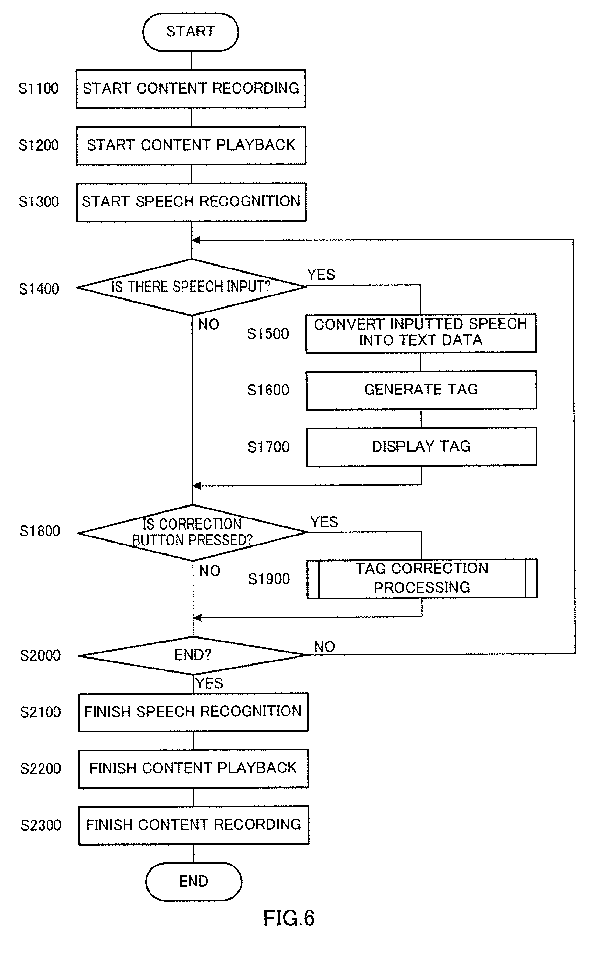

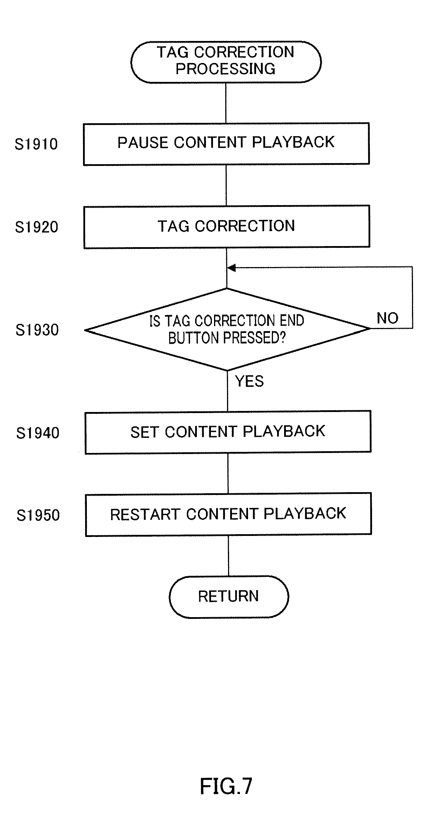

Next, the steps of tagging operation and tag correction operation using content tagging support apparatus 100 described above will be described using the flowcharts shown in FIGs.6 and 7.

First, the steps of tagging operation will be described using FIG.6.

At first, a video signal is inputted from, for example, a camera (not shown), and the video is displayed on content displaywindow 201. The user presses recording start button 203 while watching content display window 201. The recording section of content tagging support apparatus 100 (not shown) starts recording content when recording start button 203 is pressed (step S1100).

Next, content playback section 101 starts a content playback when playback start button 210 is pressed (step S1200). Specifically, by outputting the above-described playback signal, content playback section 101 commands monitor section 102 to display tagging window 200 shown in FIG.3.

Next, speech recognition section 104 starts speech recognition when speech recognition start button 206 is pressed (step S1300).

Next, the user says aloud the tag to be added while watching the playback video displayed on content display window 201, and repeats this to generate the tag until the end of the operation. That is, speech recognition section 104 monitors this spoken sound to be inputted (step S1400).

For example, when it comes to the video of a tennis game, the user says aloudwords such as *"*serve*"*, *"*backhand*"*, "volley", "forehand" and "smash" for generating tags. When voice is inputted through input section 106 (step S1400: "YES"), speech recognition section 104 converts the inputted speech into text data by performing speech recognition processing on each inputted speech (step S1500).

Tag generating section 103 generates a tag by tying text data showing the recognition result with a time code showing the speech time and outputs the generated tag to monitor section 102 (step S1600). The speech time preferably shows speech start time. The time code is received from content playtime section 101.

Monitor section 102 updates the display content on tag display window 202 of tagging window 200 shown in FIG.3, displays tag check window 300 shown in FIG.4 and displays the inputted tag on tag check window 300 (step S1700). If tag check window 300 is already displayed, the inputted tag is additionally displayed on tag check window 300.

Further, in the steps of the tagging operation, if the starting steps from step S1100 to S1300 are linked and can be executed by pressing one button, it is possible to simplify the operation and reduce the operation time.

As shown in FIG.4, tag history window 301 on tag check window 300 displays a history of tags that have been generated, so that the user can check the history while the user says tags aloud for tagging. Then, when the user finds an error with a tag by recognition errors, the user presses tag correction button 302 placed on the right side of tag check window 300. In this example, assume that tag correction button 302 placed on the right side of tag history window 301 is pressed to correct "backhand" in the second line, to "back volley".

When tags are displayed in step S1700, tag correcting section 108 monitors tag correction button 302 to be pressed (step S1800). Further, when voice is not inputted (step S1400: *"*NO*"*), the processing for content tagging support apparatus 100 proceeds to step S1800. When tag correction button 302 is pressed (step S1800: "YES"), content tagging support apparatus 100 performs tag correction processing (step S1900).

Here, the steps of tag correction operation will be described using FIG.7.

The user presses pause button 209 before performing tag correction. When pause button 209 is pressed, content playback control section 109 pauses a content playback (step S1910).

As described above, tag correction window 400 provides uncorrected tag window 401 and corrected tag window 402, and an uncorrected tag is copied in advance as a corrected tag. Therefore, the user can correct the uncorrected tag using input section 107 such as a mouse and keyboard. Thus, tag correction is performed (step S1920). FIG. 5 shows a case as an example where "backhand" is corrected to "back volley".

The user presses end button 403 after checking the correction result. When end button 403 is pressed (step S1930: "YES"), tag correcting section 108 reports this to content playback control section 109. Content playback control section 109, upon receiving this report, performs setting of a content playback (step S1940). Specifically, content playback control section 109 sets the playback speed of content faster than the default playback speed. The setting of playback speed will be described in detail later.

Next, the user presses playback start button 210. When playback start button 210 is pressed, tag correcting section 108 reports an end of tag correction operation to content playback control section 109. Content playback control section 109, upon receiving this report, restarts the content playback from the pause point (step S1950) and returns to the processing of FIG.6.

Further, in the above steps, by linking step S1800 shown in FIG. 6 and step S1910 shown in FIG.7 and executing these steps by pressing one button, it is possible to simplify the operation and reduce the operation time required to move a mouse or check a button. Specifically, for example, when tag correction 108 detects that tag correction button 302 is pressed, tag correcting section 108 may report a start of tag correction to playback control section 109, and, when content playback control section 109 receives this report, content playback control section 109 may command content playback section 101 to pause the content playback. Further, in a similar fashion, by linking steps from S1930 to 1950 in FIG.7, the same result can be achieved. Specifically, for example, tag correcting section 108 may finish the tag correction operation when end button 403 is pressed, and content playback control section 109 may restart the content playback when the setting of content playback is completed.

Now, back to FIG.6, and explanation will be continued. When tagging and tag correction are not finished yet (step S2000: "NO"), the processing returns to step S1400.

After this step, step S1400 to S2000 are repeated, and, when tagging and tag correction are all finished (step S2000: "YES"), speech recognition section 104 finishes speech recognition (step S2100) . Accordingly, content playback section 101 finishes playing content (step S2200), and the recording section finishes recording content. Then, content tagging support apparatus 100 finishes the series of processing. Further, in a similar fashion, by linking end steps of step S2000 to 2300 and executing the end steps by pressing one button, it is possible to simplify an operation and avoid the waste of the operation time. For example, recording may be finished by pressing recording start button 203 again, and, when all of the recorded content is played, the content playback and speech recognition may be finished.

Here, errors in speech recognition are classified into three types: substitution error where speech does not match a recognition result; insertion error where a recognition result is outputted when the user does not speak; and deletion error where a recognition result is not outputted when the user speaks.

In step S1800 of FIG. 6, when these errors are found and correction buttons are pressed, details of correcting errors in step S1920 of FIG.7 vary. That is, when a substitution error occurs, the speech recognition result part is corrected. In this case, faster correction is possible than inputting via a keyboard, by displaying not only the first place option of the speech recognition result but also other options and selecting the option from all options. Inputting via a keyboard may be performed if there is not a correct option in all options. Further, when there is an option that is partly matched, the option may be selected and the mismatch part of the option may be corrected.

Further, when an insertion error occurs, correction can be performed by deleting the whole tag. In this case, by providing a deletion button, correction can be performed quickly. Further, when a deletion error occurs, it is necessary to say aloud the tag again after step S1800 of FIG. 6 until a recognition result is outputted. If necessary, in step S1920 of FIG.7, the time information part of the tag is corrected (by subtracting the time for the delay caused by saying aloud the tag again).

By following the above-described steps, a content playback pauses during tag correction operation, so that the operation is not needed where a playback point that has been moved forward during tag correction operation is moved backward. Therefore, a single person is able to reduce an increase of time caused by such operations and perform tagging operation. However, the time for pausing a content playback is required in addition to the playback time corresponding to the time for performing the tagging operation. Then, in step S1940 of FIG.7, the restarted playback speed of content is set to be faster than the default playback speed set before the content playback is paused, and, in step S1950 of FIG. 7, the content playback is restarted. By doing so, a playback is performed faster between the posed point and the currently recorded point, and, when the playback catches up with the currently recording time, the playback is performed at the default speed, and it is possible to perform tag operation along the playback video.

Specifically, the restarted playback speed of content is set as follows, for example.

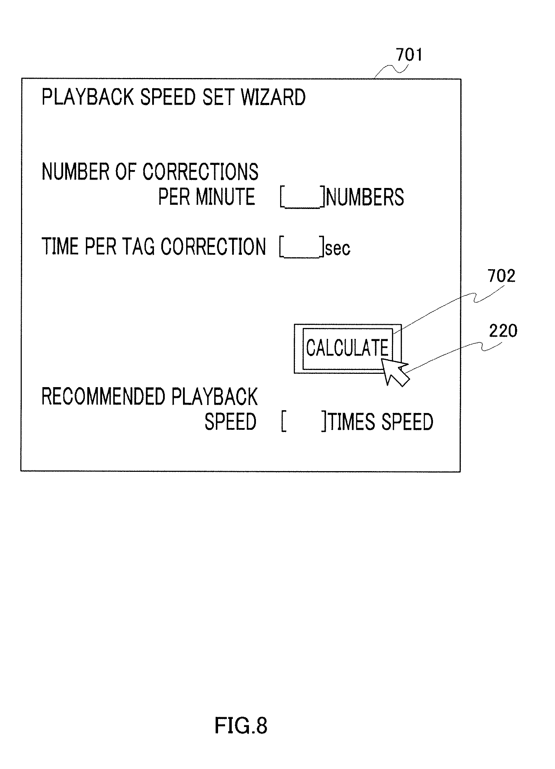

FIG. 8 illustrates playback speed setting window 701 for setting the playback speed. Playback speed setting window 701 is provided at monitor section 102, and, for example, is displayed before content is recorded. The user inputs the number of corrections per minute and the time per correction operation in blanks on this window, and presses calculation button 702. A calculation apparatus (not shown) provided in content tagging support apparatus 100 calculates recommended playback speed using, for example, the equation of: unit_time / (unit_time - the_number_of_corrections_per_unit_time x time_per_correction_opperation (sec)) ; and displays the result of calculation. The displayed numerical values are inputted to content playback control section 109 as the playback speed after playback is restarted (hereinafter "restarted playback speed") according to the system setting function provided additionally (not shown).

The number of corrections per unit time (one minute) and time per correction operation may be determined based on experience or may be actually measured by inputting and correcting tags using short-time samples Further, the number of corrections per unit time (one minute) is calculated by multiplying the number of spoken words (frequency of occurrence) per unit time (one time) by the possibility of recognition errors (frequency of recognition errors) in speech recognition.

Content playback control section 109 sets the restarted playback speed inputted in the above-described way as the playback speed of content in step S1940 of FIG.7. Then, for example, content playback control section 109 monitors a playback video catching up with a currently recorded video and reduces the playback speed of content to the default playback speed when the playback catches up with the currently recorded video. By doing so, it is possible to make up for the delay of the playback video with respect to the currently recorded video caused by tag correction and reduce an increase of the tagging operation time.

Here, it is also possible to apply other techniques than the above-described technique for setting the playback speed of content.

For example, when the total playback time of content is known in advance, restarted playback speed may be determined dynamically every time tag correction is finished, based on the correlation between remained playback time in a case where content is played without pause and the accumulation of delay time caused by tag corrections.

Further, the restarted playback speed may be set according to the details of content such as types of sports. For example, the restarted playback speed may be set 2 times faster than the default speed for baseball and 1.2 times faster than the default speed for basketball. Specifically, for example, content playback control section 109 has a table describing set values of restarted playback speed applicable to types of content, determines or selects the type of content to be played, and employs the applicable restarted playback speed in the table. Therefore, when playback speed for performing tagging operation changes between types of content, it is possible to set the restarted playback speed within an adequate range.

The type of details of content may be determined by further providing in advance, for example, a table describing terminology or players' names every type of content, performing speech recognition in a certain earlier period in content, and searching for the extracted words in the table.

Further, an excitement detecting section, which detects the degree of excitement in a part of the content playback, may be set at work so as to control the playback speed of content according to the degree of excitement, such as playing less excitingparts faster. Specifically, for example, an excitement detecting section, which monitors whether or not the sound volume of content exceeds a threshold, may be provided in content playback control section 109, so that content playback control section 109 sets a period where sound volume over the threshold is detected, as an exciting period. This technique is disclosed in detail in, for example, Japanese Patent Application Laid-Open No.2960939 and will not be explained herein. Further, when the content playback restarts after tag correction, the exciting period is played at the default speed, and other periods are played at faster speed than the default speed.

In games of sports, audience say aloud with bigger voice in exciting scenes. In such scenes, cases oftentimes occur where tagging is frequently performed. Therefore, by setting playback speed according to the degree of excitement, it is possible to change the playback speed according to the frequency of tagging, and reduce an increase of tagging operation time without damaging workability of tagging operation.

Further, when a content playback is set, the point of starting the playback may be set.

For example, a button is provided on tag correction window 400 for going back certain time, for example, ten seconds, not for going back to a paused point . Further, when this button is pressed, content playback control section 109 starts a playback from certain time before the paused point and continues to perform tagging. By doing so, for example, when the timing to press tag correction button 302 is delayed or when the detail of immediately preceding playback needs to be checked when playback is restarted, the content is played from a little earlier, and the user can perform tagging operation at ease upon fast playback.

Further, when a content playback is set, only the point for starting a playback may be set instead of setting the playback speed of content.

For example, content playback control section 109 determines or selects the period between a paused point and a point of currently recording time, as the period that needs not be tagged. Further, content playback control section 109 skips the period that needs not be tagged and starts a playback from the point of currently recording time. By doing so, for example, when currently recorded content is played and there are scenes where tagging is not required such as the middle of timeout in broadcast of sports, it is possible to skip to the current recording time. Therefore, it is possible to reduce an increase of the tagging operation time without damaging workability of tagging operation.

Further, the time to skip to is not limited to the currently recording time. A scene change detecting section, which detects the scene change of content, may be set at work in advance, and content playback control section 109 may propose a list of still images of scene change times as points for skip destination, to allow the user to select a point from the list. By doing so, the user can designate more appropriate skip destinations. For example, the scene change detecting section may calculate an image histogram intermittently and determine as scene change time the timing at which the histogram changes significantly. This technique is disclosed in detail in, for example, Japanese Patent Application Laid-Open No.3175632 and will not be explained herein.

As described above, by providing content tag playback control section 109 in content tagging support apparatus 100, it is possible to perform playback control in synchronization with a correction operation such that a content playback is paused in synchronization with a start of tag correction and is restarted in synchronization with an end of tag correction. As a result, a user can perform both tagging operation and tag correction operation alone, so that it is possible to reduce an increase of operation time. Therefore, it is possible to realize operation to add a tag, which helps content reuse, to the content at lower cost and improve content delivery service.

Although a case has been described with the present embodiment where a keyboard or mouse is used as an input section during tag correction operation, it is also possible to use a microphone.

Further, although a case has been described with the present embodiment as an example where tagging is performed while video is recorded and played at the same time, in a similar fashion, it is also possible to perform tagging while video that is recorded in advance is played. In this case, by setting the target time for finishing tagging, it is possible to dynamically set the playback speed for fast playback.

That is, the content tagging support apparatus of the present invention outputs text data converted from speech as a content tag, and employs a configuration having: a content playback section that plays content; a tag generating section that generates tags; a tag correcting section that transmits tag correction information to the tag generating section to correct tags added to the content; a content playback control section that controls a content playback based on tag correction start and end report information that reports a start and an end of tag correction from the tag correcting section, and, in this content tagging support apparatus, the content playback control section transmits playback control information to the content playback section, the playback control information that controls such that the content playback is paused in synchronization with a start of tag correction and is restarted in synchronization with an end of tag correction.

By employing this configuration, even if a single user performs the tagging operation and tag correction operation, it is possible to reduce an increase of the operation time carried by the tag correction operation.

The content tagging support apparatus of the present invention employs a configuration where the content playback section sets a restarted playback speed for the content playback, the restarted playback speed being employed when the content playback is restarted after a pause, faster than the default speed which is the playback speed of the content playback before the pause.

By employing this configuration, even if a single user performs tagging operation and tag correction operation, it is possible to reduce an increase of the operation time carried by the tag correction operation.

The content tagging support apparatus of the present invention employs a configuration where the content playback control section sets the restarted playback speed to a value calculated by an equation of: unit_time / (unit_time - the_number_of_corrections_per_unit_time x time per correction operation).

By employing this configuration, even if a single user performs the tagging operation and tag correction operation, it is possible to finish the tagging operation and the tag correction operation for the operation time substantially the same as the time length of the content.

The content tagging support apparatus of the present invention employs a configuration where the content playback control section sets playback speed faster than the default speed in advance according to the details of digital content such as types of sports.

By employing this configuration, when a content playback is restarted after the content playback is paused, it is possible to change the playback speed according to the details of digital content.

The content tagging support apparatus of the present invention employs a configuration where the content playback control section takes a content playback start from certain time before the paused point.

By employing this configuration, when the timing of pause is delayed or when the detail of immediately preceding playback needs to be checked when playback is restarted, the content playback is performed from a little earlier, and the user can perform the tagging operation at ease upon fast playback.

The content tagging support apparatus of the present invention employs a configuration further having an excitement detecting section, where the content playback control section controls the playback speed of the content played by the content playback section according to the degree of excitement.

By employing this configuration, when the frequency of tagging changes according to the degree of excitement in a part of the content, it is possible to change playback speed according to the frequency of tagging and reduce an increase of tagging operation time without damaging workability of the tagging operation.

The content tagging support apparatus of the present invention employs a configuration further having a recording section, where the content playback control section skips to the currently recording time when the digital content playback is stopped and restarted.

By employing this configuration, if the period between the point content is paused and the currently recording time needs not be tagged, it is possible to skip this period, and reduce an increase of tagging operation time without damaging workability of tagging operation.

The content tagging support apparatus of the present invention employs a configuration where, when a content playback is restarted after the pause, the content playback control section shows one or more playback points as options.

By employing this configuration, when the content includes period where tagging is not necessary, it is possible to skip this, and reduce an increase of the tagging operation time without damaging workability of the tagging operation. Further, users can designate more appropriate skip destinations.

The content tagging support method of the present invention utilizes speech recognition, generates content and adds tags to the content, and employs a configuration pausing a content playback in synchronization with a start of tag correction of a tag added to the content correcting the tag and restarting the content playback in synchronization with an end of the tag correction.

By employing this configuration, even if a single user performs the tagging operation and tag correction operation, it is possible to reduce an increase of the operation time of the tag correction operation.

The content tagging support method of the present invention employs a configuration setting restarted playback speed of content faster than the speed before the content playback is paused.

By employing this configuration, even if a single user performs the tagging operation and tag correction operation, it is possible to reduce an increase of the operation time of the tag correction operation.

The present application is based on Japanese Patent Application Laid-Open No.2005-172001, filed on June 13, 2005, and Japanese Patent Application Laid-Open No.2006-160310, filed on June 8, 2006, the entire content of which is expressly incorporated by reference herein.

### Industrial Applicability

The content tagging support apparatus and content tagging method of the present invention produce tagged content and increase the asset value of content, and are useful as a part of business system. Further, the apparatus and the method are applicable for home movie and home video server.

## Claims

1. A content tagging support apparatus that supports a content tagging operation, comprising:
a speech input section that receives speech as input;
a speech recognition section that performs recognition processing of the inputted speech;
a playback section that plays content;
a tag generating section that combines data obtained by the recognition processing of the inputted speech with a playbackpoint in the content where the speech is inputted, and outputs the combination as a content tag;
a tag correcting section that outputs tag correction information for correcting a tag added to the content to the tag generating section; and
a content playback control section that outputs playback control information for controlling a content playback, to the content playback section, wherein:
the tag correcting section outputs tag correction start and end report information for reporting a start and an end of a tag correction operation according to the tag correction information, to the content playback section; and
the content playback control section controls the content playback section such that the content playback is paused in synchronization with a start of tag correction operation and is restarted in synchronization with an end of the tag correction operation, according to the tag correction start and end report information outputted from the tag correcting section.

2. The content tagging support apparatus according to claim 1, wherein the content playback section sets a restarted playback speed for the content playback, the restarted playback speed being employed when the content playback is restarted after a pause, faster than the default speed which is the playback speed of the content playback before the pause.

3. The content tagging support apparatus according to claim 2, wherein the content playback control section sets the restarted playback speed to a value calculated by an equation of: unit_time / (unit_time - the_number_of_corrections_per_unit_time x time per correction_operation).

4. The content tagging support apparatus according to claim 2, wherein the content playback control section changes the restarted playback speed according to types of content played by the content playback section.

5. The content tagging support apparatus according to claim 2, wherein, when the content playback is restarted after the pause, the content playback control section moves the content playback point a predetermined period backward.

6. The content tagging support apparatus according to claim 2, further comprising an excitement detecting section that detects a degree of excitement in a part of the content played by the content playback section,
wherein the content playback control section changes the playback speed of the content played by the content playback section according to a result of detection by the excitement detecting section.

7. The content tagging apparatus according to claim 1, further comprising a recording section that generates content while recording video and,
wherein, when the playback of a content generated by the recording section is restarted after the pause, the content playback control section skips the content to a latest point available for playback.

8. The tagging support apparatus according to claim 1, wherein, when a content playback is restarted after the pause, the content playback control section shows one or more playback points as options and skips the content playback to the selected playback point.

9. A content tagging method that supports content tagging operation, comprising:
a tag correction start monitoring step of monitoring a start of a tag correction operation for correcting a tag added to content where a playback is started;
a content playback pause step of pausing a content playback when the tag correction start monitor step detects the start of the tag correction operation;
a tag correction monitoring step of monitoring an end of the tag correction operation when the content playback pause step pauses the content playback; and
a content playback restarting step of restarting the content playback when the tag correction end monitor step detects the end of the tag correction operation.

10. The content tagging support method according to claim 9, wherein the content playback restarting step restarts the content playback faster than the default speed which is the playback speed of the content playback before the pause.
